# FASCICULE DE BREVET EUROPEEN

(11) **EP 2 109 728 B1**
(45) Date de publication et mention de la délivrance du brevet: **27.04.2011**
(21) Numéro de dépôt: 08761894.8
(22) Date de dépôt: 07.01.2008
(51) Int. Cl.: F16H 61/14, F16H 61/06, F16H 61/00

(54) **PROCEDE DE PILOTAGE DU GLISSEMENT DE L'EMBRAYAGE DE PRISE DIRECTE D'UN CONVERTISSEUR DE COUPLE**
VERFAHREN ZUR STEUERUNG DES SCHLUPFS EINER DIREKTANTRIEBSKUPPLUNG EINES DREHMOMENTUMRICHTERS
METHOD FOR CONTROLLING THE SLIP OF A DIRECT DRIVE CLUTCH OF A TORQUE CONVERTER

(30) Priorité: 19.01.2007 FR 0700384
(43) Date de publication de la demande: 21.10.2009
(73) Titulaire: Renault SAS, 92100 Boulogne Billancourt (FR)
(72) Inventeur: GESNOT, Béatrice, F-75012 Paris (FR); TURPIN, Thomas, F-91400 Orsay (FR); VAUTHIER, Catherine, F-78960 Voisins Le Bretonneux (FR)
(86) Numéro de dépôt international: PCT/FR2008/050016
(87) Numéro de publication internationale: WO 2008/102089

(56) Documents cités:
- EP-B1- 1 160 488
- JP-A- 2 212 668

## Description

L'invention concerne un procédé de pilotage du glissement de l'embrayage de prise directe d'un convertisseur de couple lors d'un passage de vitesses d'une transmission automatisée.

On connaît un tel procédé de pilotage du glissement du type selon lequel est envoyé, comme consigne à une électrovanne de régulation de la pression hydraulique de l'embrayage de prise directe, des valeurs de rapport cyclique d'ouverture, la valeur initiale de la consigne étant déterminée à partir de paramètres issus d'une cartographie. Un tel procédé est connu du document générique EP 1 160 488 B1.

En général une consigne envoyée à un instant donné pendant le passage de vitesse est définie en fonction des valeurs instantanées des régimes du moteur et de la turbine mesurées quelques fractions de seconde avant l'envoi de la consigne, valeurs elles-mêmes résultant du glissement de l'embrayage de prise directe et donc d'une consigne précédemment envoyée à l'électrovanne de régulation. Aussi, quelles que soient les qualités du procédé de pilotage du glissement, notamment par la justesse du rapport cyclique d'ouverture par rapport au glissement souhaité, celui-ci permet difficilement d'éviter des chocs ou des emballements de la turbine non souhaités au début du passage, la valeur initiale de la consigne ne pouvant pas dépendre de valeurs instantanées des régimes du moteur et de la turbine mesurées quelques fractions de seconde auparavant. Et ceci alors qu'il peut exister des dispersions entre véhicules, des dérives dans le temps de l'embrayage de prise directe, et des dérives dans le temps des dispersions des paramètres utilisés pour déterminer la valeur du rapport cyclique d'ouverture initiale.

La présente invention vise à remédier aux inconvénients précités conformément au procédé décrit dans la revendication 1.

Dans le procédé du type précité, la valeur de rapport cyclique d'ouverture initial envoyée comme consigne est la valeur de rapport cyclique d'ouverture initial normale déterminée par cartographie corrigée par un coefficient correcteur déterminé et mémorisé à l'issu d'un précédent passage de vitesse similaire à partir de la comparaison entre la valeur d'un glissement représentatif des valeurs de glissement mesurés lors de ce précédent passage et celle d'un glissement théorique de référence correspondant à des régimes du moteur et de la transmission nominaux.

Ainsi, le procédé permet d'améliorer la qualité du pilotage du glissement en début de passage en envoyant une consigne initiale dépendante des régimes antérieurs du moteur et de la turbine.

D'autres particularités et avantages de la présente invention apparaîtront dans la description détaillée d'un mode de réalisation donné à titre d'exemple non limitatif et illustré par les dessins mis en annexe dans lesquels :

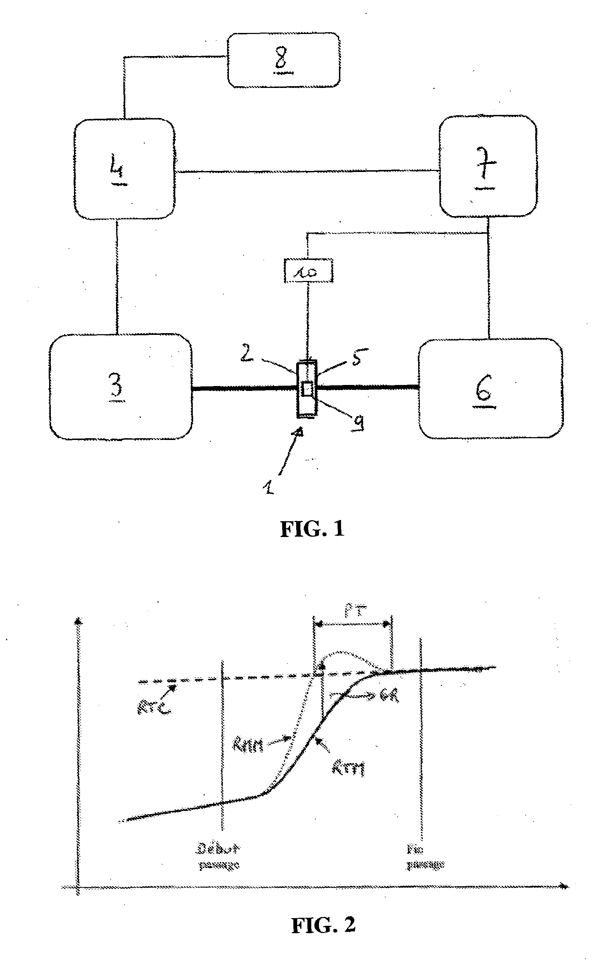

La figure 1 est un schéma illustrant les différents organes d'un véhicule pouvant interagir sur un convertisseur de couple, et
La figure 2 est une représentation schématique de l'évolution des régimes du moteur et de la turbine lors d'un passage descendant de vitesse.

De façon classique, un convertisseur de couple 1 comprend, d'une part, une pompe 2 qui est reliée à moteur 3 commandé par une unité de pilotage du moteur 4, et, d'autre part, une turbine 5 qui est reliée à une boîte de vitesses 6 commandée par une unité de pilotage de la boîte de vitesses 7, les deux unités de pilotage 4,7 étant connectées entre elles et à un organe de commande 8 commandé par un utilisateur (la pédale d'accélération). De plus, le convertisseur de couple comprend également un embrayage de prise directe 9 utilisé pour solidariser la turbine 5 à la pompe 2 ou permettre un glissement relatif de ces deux organes 2,5 selon les circonstances, par une modification de la pression d'huile régnant dans la chambre de l'embrayage. La pression est régulée par une électrovanne de régulation 10 proportionnelle commandée en tout ou rien avec un rapport cyclique d'ouverture variable dont la valeur est envoyée comme consigne par l'unité de pilotage de la boîte de vitesses 7.

Classiquement, au début d'un passage de vitesse, l'unité de pilotage de la boîte de vitesse 7 calcule les paramètres nécessaires pour la gestion du passage de vitesses et détermine s'il est nécessaire de faire glisser l'embrayage de prise directe 9, auquel cas l'unité de pilotage de la boîte de vitesse 7 calcule la valeur du rapport cyclique d'ouverture initial RCOIE à envoyer à l'électrovanne de régulation 10 comme consigne initiale.

Conformément à la présente invention, la valeur du rapport cyclique d'ouverture initial envoyé RCOIE est la valeur du rapport cyclique d'ouverture initial normal RCOIN corrigée par un coefficient correcteur mémorisé CCM dans la mémoire vive EEPROM de l'unité de pilotage de la boîte de vitesses 7. Dans le cas où le passage de vitesse en cours est le premier de ce type (depuis le démarrage du véhicule), le coefficient correcteur mémorisé CCM est égal à une constante initiale KI prédéterminée. Dans le présent mode de réalisation, la valeur du rapport cyclique d'ouverture initial envoyé RCOIE est égale au produit de la valeur de rapport cyclique d'ouverture initial normal RCOIN par le coefficient correcteur mémorisé CCM (RCOIE = RCOIN x CCM), la constante initiale KI étant alors égale à 1.

La mémoire EEPROM contient donc autant de valeur de coefficient correcteur mémorisés CCM que nécessaire (en fonction du type de passage, de la température de l'huile, du couple moteur).

La valeur du rapport cyclique d'ouverture initial normal RCOIN est déterminée classiquement en fonctions des paramètres précédemment calculés par l'unité de pilotage de la boîte de vitesse 7 pour la gestion du passage de vitesses, par exemple à l'aide d'une cartographie. Ces paramètres sont, par exemple, le type de passage en cours, le couple moteur, la vitesse du véhicule et la température de l'huile de l'embrayage de prise directe 9.

Le pilotage ultérieur du glissement de l'embrayage de prise directe est classique.

Le coefficient correcteur mémorisé CCM a été déterminé à l'issue du précédent passage de vitesse de même type à partir de la comparaison entre, d'une part, la valeur d'un glissement GR qui est représentatif des valeurs de glissement GC calculés lors du précédent passage et, d'autre part, la valeur d'un glissement théorique GT de référence correspondant à des régimes du moteur et de la transmission nominaux. Ici la comparaison entre la valeur du glissement représentatif GR et celle du glissement théorique de référence GT est effectuée par la différence de ces deux valeurs (GR - GT).

Dans le présent mode de réalisation, la valeur du glissement représentatif GR est la valeur maximale des glissements GC calculés pendant une période de temps PT s'étendant pendant le passage de vitesse précédent de même type. Cette période de temps PT est la période pendant laquelle le régime moteur mesuré RMM fut supérieur, lors du précédent passage de vitesse de même type, au régime turbine calculé RTC sur le rapport final de vitesses. Ce régime de la turbine calculé RTC est égal au produit de la vitesse du véhicule par le rapport final de vitesse. La valeur d'un glissement GC est égale à la différence entre la valeur du régime moteur mesuré RMM et celle du régime turbine mesuré RTM (GC = RMM - RTM).

La valeur du glissement théorique GT est obtenue, dans le présent mode de réalisation, à partir d'une cartographie en fonction du type de passage en cours.

Dans le présent exemple, le coefficient correcteur mémorisé CCM a été déterminé à partir d'un coefficient correcteur normé CCN. Ce coefficient correcteur normé CCN a été obtenu par une cartographie en fonction du type de passage en cours, de la température de l'huile de l'embrayage de prise directe, du couple moteur et du résultat de la comparaison entre la valeur du glissement représentatif GR et celle du glissement théorique de référence GT (ici, le résultat de la comparaison est GR - GT). Plus précisément, le coefficient correcteur mémorisé CCM a été déterminé à partir du coefficient correcteur normé CCN via un coefficient correcteur idéal CCI qui est déterminé à partir du coefficient correcteur normé CCN et du précédent coefficient correcteur mémorisé CCMA (celui qui était mémorisé dans la mémoire vive EEPROM au début du précédent passage). Ici, le coefficient correcteur idéal CCI est égal au produit du coefficient correcteur normé CCN par le précédent coefficient correcteur mémorisé CCMA (CCI = CCN x CCMA).

Dans le présent mode de réalisation, le coefficient correcteur mémorisé CCM a été déterminé en pondérant le coefficient correcteur idéal CCI par le précédent coefficient correcteur mémorisé CCMA afin d'obtenir un filtrage. En l'occurrence, la pondération est réalisée par la somme du coefficient correcteur idéal CCI affecté d'un premier coefficient de pondération CP1 et du précédent coefficient correcteur mémorisé CCMA affecté d'un second coefficient de pondération CP2 (CCM = CCI x CP1 + CCMA x CP2). Ici, le premier coefficient de pondération CP1 est compris entre 0 et 1, le second coefficient de pondération CP2 étant son complémentaire à 1 (CP2 = 1 - CP1). Ce coefficient correcteur mémorisé CCM est mémorisé dans la mémoire vive EEPROM à la place du précédent coefficient correcteur mémorisé CCMA.

Ainsi, au début d'un premier passage de vitesse, la mémoire vive contient un coefficient correcteur mémorisé CCMA qui est utilisé pour déterminer le rapport cyclique d'ouverture initial envoyé RCOIE. A la fin de ce premier passage, la mémoire vive contient toujours le même coefficient correcteur mémorisé CCMA à partir duquel le coefficient correcteur idéal CCI est déterminé, puis le nouveau coefficient correcteur mémorisé CCM est calculé et mémorisé.

Par ailleurs, dans le présent mode de réalisation, à la fin d'un passage de vitesse, le coefficient correcteur mémorisé CCM est déterminé à partir du comportement de l'embrayage de prise directe 9 pendant ce passage de vitesse, uniquement si certaines conditions qui dépendent de ce passage de vitesse sont respectées. En l'occurrence, trois conditions sont nécessaires : le point de fonctionnement doit être stabilisé pendant tout le passage de vitesse (la position de la pédale d'accélération doit être stable), la température de l'huile de l'embrayage de prise directe doit demeurer dans une plage de température prédéfinie pendant tout le passage de vitesse, et la turbine ne doit pas s'emballer pendant tout le passage de vitesse. Ici, l'absence d'emballement de la turbine est réalisée lorsque la différence entre le régime turbine calculé RTC sur le rapport final de vitesse et celui mesuré RTM (RTC - RTM) demeure inférieure à un seuil prédéterminé.

Les coefficients de pondération CP1, CP2, la plage de température à respecter pour calculer le coefficient correcteur mémorisé CCM, et le seuil définissant l'emballement de la turbine sont des valeurs calibrées.

La présente invention n'est pas limitée au mode de réalisation précédemment décrit. Il serait ainsi possible de ne pas pondérer le coefficient correcteur idéal CCI, le coefficient correcteur mémorisé CCM étant alors égal au coefficient correcteur idéal CCI. De même, la pondération pourrait être plus complexe. Il serait également possible que la mémoire EEPROM soit agencée de sorte qu'un seul coefficient correcteur mémorisé CCM soit valable, pour un type de passage, pour toute une plage de température d'huile associée à une plage de couple moteur.

## Revendications

1. Procédé de pilotage du glissement d'un embrayage de prise directe (9) d'un convertisseur de couple (1) lors d'un passage de vitesses d'une transmission automatisée par l'envoi, comme consigne, à une électrovanne (10) de régulation de la pression hydraulique de l'embrayage de prise directe (9), de valeurs de rapport cyclique d'ouverture dont la valeur initiale (RCOIE) envoyée comme consigne est la valeur de rapport cyclique d'ouverture initial (RCOIN) normale déterminée par cartographie corrigée par un coefficient correcteur (CCM) qui est déterminé et mémorisé à l'issu d'un précédent passage de vitesse similaire à partir de la comparaison entre, d'une part, la valeur d'un glissement (GR) représentatif des valeurs de glissement (GM) mesurés lors du précédent passage et, d'autre part, celle d'un glissement théorique (GT) de référence correspondant à un régime moteur et un régime turbine nominaux, **caractérisé en ce que** la valeur du glissement représentatif (GR) est la valeur maximale des glissements mesurés (GM) pendant une période de temps (PT) s'étendant pendant le précédent passage de vitesse.

2. Procédé selon la revendication 1, **caractérisé en ce que** la valeur de rapport cyclique d'ouverture initial envoyé (RCOIE) est égale au produit de la valeur de rapport cyclique d'ouverture initial normal (RCOIN) par le coefficient correcteur mémorisé (CCM).

3. Procédé selon la revendication 1 ou 2, **caractérisé en ce que** la comparaison entre la valeur du glissement représentatif (GR) et celle d'un glissement théorique (GT) est réalisée par la différence de ces deux valeurs (GR - GT).

4. Procédé selon l'une des revendications 1 à 3, **caractérisé en ce que** la période de temps (PT) est celle pendant laquelle le régime moteur mesuré (RMM) fut supérieur au régime turbine (RTC) calculé sur le rapport final de vitesses.

5. Procédé selon l'une des revendications 1 à 4, **caractérisé en ce que** le coefficient correcteur mémorisé (CCM) est déterminé à partir d'un coefficient correcteur normé (CCN) obtenu par une cartographie en fonction du type de passage en cours, de la température de l'huile de l'embrayage de prise directe (9), du couple moteur et du résultat de la comparaison entre la valeur du glissement représentatif (GR) et celle d'un glissement théorique (GT).

6. Procédé selon la revendication 5, **caractérisé en ce que** le coefficient correcteur mémorisé (CCM) a été déterminé à partir d'un coefficient correcteur idéal (CCI) qui a été déterminé à partir du coefficient correcteur normé (CCN) et du précédent coefficient correcteur mémorisé (CCMA).

7. Procédé selon la revendication 6, **caractérisé en ce que** le coefficient correcteur idéal (CCI) est égal au produit du coefficient correcteur normé (CCN) par le précédent coefficient correcteur mémorisé (CCMA).

8. Procédé selon la revendication 6 ou 7, **caractérisé en ce que** le coefficient correcteur mémorisé (CCM) est égal au coefficient correcteur idéal (CCI).

9. Procédé selon la revendication 6 ou 7, **caractérisé en ce que** le coefficient correcteur mémorisé (CCM) est égal au coefficient correcteur idéal (CCI) pondéré par le précédent coefficient correcteur précédemment mémorisé (CCMA).

10. Procédé selon la revendication 9, **caractérisé en ce que** la pondération est réalisée par la somme du coefficient correcteur idéal (CCI) affecté d'un premier coefficient de pondération (CP1) compris entre 0 et 1, et du précédent coefficient correcteur mémorisé (CCMA) affecté d'un second coefficient de pondération (CP2) complémentaire à 1 du premier coefficient de pondération (CP1).

11. Procédé selon l'une des revendications 1 à 10, **caractérisé en ce que** le coefficient correcteur envoyé (CCM) est calculé en fin de passage de vitesse uniquement si des conditions d'apprentissage dépendant de ce passage sont respectées.

12. Procédé selon la revendication 11, **caractérisé en ce que** l'une des conditions d'apprentissage est la stabilisation du point de fonctionnement.

13. Procédé selon la revendication 11 ou 12, **caractérisé en ce que** l'une des conditions d'apprentissage est le maintien de la température de l'huile de l'embrayage de prise directe (9) dans une plage de température.

14. Procédé selon l'une des revendications 11 à 13, **caractérisé en ce que** l'une des conditions d'apprentissage est le maintien de la différence entre le régime turbine calculé (RTC) sur le rapport final de vitesses et le régime turbine mesuré (RTM) à une valeur inférieure à un seuil prédéterminé.

## Claims

1. Method of controlling the slip of a direct-drive clutch (9) of a torque converter (1) during a gear shift of an automatic transmission through the transmitting, by way of set point, to an electrically-operated valve (10) that regulates the hydraulic pressure of the direct-drive clutch (9), of open duty cycle values of which the transmitted initial value (RCOIE) transmitted as set point is the normal initial open duty cycle value (RCOIN) determined by a map corrected by a corrective coefficient (CCM) which is determined and stored at the end of a similar previous gear shift on the basis of the comparison between, on the one hand, the value of a representative slip (GR) that represents the measured slip (GM) values measured during the previous gear shift and, on the other hand, the value of a reference theoretical slip (GT) corresponding to a nominal engine speed and a nominal turbine speed, **characterized in that** the value of the representative slip (GR) is the maximum value of the measured slips (GM) measured in a time period (PT) extending over the previous gear shift.

2. Method according to Claim 1, **characterized in that** the transmitted initial open duty cycle value (RCOIE) is equal to the product of the normal initial open duty cycle value (RCOIN) times the stored corrective coefficient (CCM).

3. Method according to Claim 1 or 2, **characterized in that** the comparison between the value of the representative slip (GR) and the value of a theoretical slip (GT) is performed by determining the difference between these two values (GR-GT).

4. Method according to one of Claims 1 to 3, **characterized in that** the time period (PT) is the period during which the measured engine speed (RMM) was higher than the calculated turbine speed (RTC) calculated on the final speed ratio.

5. Method according to one of Claims 1 to 4, **characterized in that** the stored corrective coefficient (CCM) is determined from a standardized corrective coefficient (CCN) obtained from a map as a function of the type of gear shift in progress, of the oil temperature of the direct-drive clutch (9), of the engine torque and of the result of the comparison between the value of the representative slip (GR) and the value of a theoretical slip (GT).

6. Method according to Claim 5, **characterized in that** the stored corrective coefficient (CCM) has been determined from an ideal corrective coefficient (CCI) which was determined on the basis of the standardized corrective coefficient (CCN) and of the previous stored corrective coefficient (CCMA).

7. Method according to Claim 6, **characterized in that** the ideal corrective coefficient (CCI) is equal to the product of the standardized corrective coefficient (CCN) times the previous stored corrective coefficient (CCMA).

8. Method according to Claim 6 or 7, **characterized in that** the stored corrective coefficient (CCM) is equal to the ideal corrective coefficient (CCI).

9. Method according to Claim 6 or 7, **characterized in that** the stored corrective coefficient (CCM) is equal to the ideal corrective coefficient (CCI) weighted by the previous previously stored corrective coefficient (CCMA).

10. Method according to Claim 9, **characterized in that** the weighting is performed using the sum of the ideal corrective coefficient (CCI) assigned a first weighting coefficient (CP1) comprised between 0 and 1, and of the previous stored corrective coefficient (CCMA) assigned a second weighting coefficient (CP2) that is the ones complement of the first weighting coefficient (CP1).

11. Method according to one of Claims 1 to 10, **characterized in that** the transmitted corrective coefficient (CCM) is calculated at the end of the gear shift only if learning conditions dependent on this gear shift are met.

12. Method according to Claim 11, **characterized in that** one of the learning conditions is that the operating point must have stabilized.

13. Method according to Claim 11 or 12, **characterized in that** one of the learning conditions is that the oil temperature of the direct-drive clutch (9) must be kept within a temperature range.

14. Method according to one of Claims 11 to 13, **characterized in that** one of the learning conditions is that the difference between the calculated turbine speed (RTC) calculated on the final speed ratio and the measured turbine speed (RTM) must be kept at a value below a predetermined threshold.

## Patentansprüche

1. Verfahren zum Steuern des Schlupfs einer Direktkupplung (9) eines Drehmomentwandlers (1) bei einem Gangwechsel eines automatisierten Getriebes durch das Senden, als Sollwert, an ein Elektroventil (10) zur Regelung des Hydraulikdrucks der Direktkupplung (9), von Taktverhältniswerten, deren als Sollwert gesendeter Anfangswert (RCOIE) der normale Anfangstaktverhältniswert (RCOIN) ist, bestimmt durch ein Kennfeld korrigiert durch einen Korrekturkoeffizient (CCM), der am Ende eines vorhergehenden ähnlichen Gangwechsels ausgehend von dem Vergleich zwischen einerseits dem Wert eines für die Werte gemessener Schlupfe (GM) des vorhergehenden Wechsels repräsentativen Schlupfs (GR) und andererseits dem Wert eines theoretischen Bezugsschlupfs (GT) entsprechend einer Nennmotordrehzahl und einer Nennturbinendrehzahl bestimmt und gespeichert wird, **dadurch gekennzeichnet, dass** der Wert des repräsentativen Schlupfs (GR) der maximale Wert der während eines Zeitraums (PT) gemessenen Schlupfe (GM) ist, der sich während des vorhergehenden Gangwechsels erstreckt.

2. Verfahren nach Anspruch 1, **dadurch gekennzeichnet, dass** der gesendete Anfangstaktverhältniswert (RCOIE) gleich dem Produkt aus dem normalen Anfangstaktverhältniswert (RCOIN) und dem gespeicherten Korrekturkoeffizient (CCM) ist.

3. Verfahren nach Anspruch 1 oder 2, **dadurch gekennzeichnet, dass** der Vergleich zwischen dem Wert des repräsentativen Schlupfs (GR) und demjenigen eines theoretischen Schlupfs (GT) durch die Differenz dieser zwei Werte (GR - GT) erzielt wird.

4. Verfahren nach einem der Ansprüche 1 bis 3, **dadurch gekennzeichnet, dass** der Zeitraum (PT) derjenige ist, während dem die gemessene Motordrehzahl (RMM) höher als die Turbinendrehzahl (RTC) berechnet am höchsten Gang war.

5. Verfahren nach einem der Ansprüche 1 bis 4, **dadurch gekennzeichnet, dass** der gespeicherte Korrekturkoeffizient (CCM) ausgehend von einem genormten Korrekturkoeffizient (CCN) bestimmt wird, der durch ein Kennfeld abhängig vom Typ des laufenden Gangwechsels, der Temperatur des Öls der Direktkupplung (9), dem Motordrehmoment und dem Ergebnis des Vergleichs zwischen dem Wert des repräsentativen Schlupfs (GR) und demjenigen eines theoretischen Schlupfs (GT) erhalten wird.

6. Verfahren nach Anspruch 5, **dadurch gekennzeichnet, dass** der gespeicherte Korrekturkoeffizient (CCM) ausgehend von einem idealen Korrekturkoeffizient (CCI) bestimmt wurde, der ausgehend von dem genormten Korrekturkoeffizient (CCN) und dem gespeicherten vorhergehenden Korrekturkoeffizient (CCMA) bestimmt wurde.

7. Verfahren nach Anspruch 6, **dadurch gekennzeichnet, dass** der ideale Korrekturkoeffizient (CCI) gleich dem Produkt aus dem genormten Korrekturkoeffizient (CCN) und dem gespeicherten vorhergehenden Korrekturkoeffizient (CCMA) ist.

8. Verfahren nach Anspruch 6 oder 7, **dadurch gekennzeichnet, dass** der gespeicherte Korrekturkoeffizient (CCM) gleich dem idealen Korrekturkoeffizient (CCI) ist.

9. Verfahren nach Anspruch 6 oder 7, **dadurch gekennzeichnet, dass** der gespeicherte Korrekturkoeffizient (CCM) gleich dem idealen Korrekturkoeffizient (CCI) gewichtet mit dem vorhergehend gespeicherten Korrekturkoeffizient (CCMA) ist.

10. Verfahren nach Anspruch 9, **dadurch gekennzeichnet, dass** die Gewichtung durch die Summe des idealen Korrekturkoeffizienten (CCI) versehen mit einem ersten Gewichtungskoeffizient (CP1) zwischen 0 und 1, und des gespeicherten vorhergehenden Korrekturkoeffizienten (CCMA) versehen mit einem zweiten Gewichtungskoeffizient (CP2) komplementär zu 1 des ersten Gewichtungskoeffizienten (CP1) durchgeführt wird.

11. Verfahren nach einem der Ansprüche 1 bis 10, **dadurch gekennzeichnet, dass** der gesendete Korrekturkoeffizient (CCM) am Ende des Gangwechsels nur berechnet wird, wenn von diesem Wechsel abhängende Lernbedingungen beachtet werden.

12. Verfahren nach Anspruch 11, **dadurch gekennzeichnet, dass** eine der Lernbedingungen die Stabilisierung des Betriebspunkts ist.

13. Verfahren nach Anspruch 11 oder 12, **dadurch gekennzeichnet, dass** eine der Lernbedingungen die Beibehaltung der Temperatur des Öls der Direktkupplung (9) in einem Temperaturbereich ist.

14. Verfahren nach einem der Ansprüche 11 bis 13, **dadurch gekennzeichnet, dass** eine der Lernbedingungen die Beibehaltung der Differenz zwischen der Turbinendrehzahl (RTC) berechnet am höchsten Gang und der gemessenen Turbinendrehzahl (RTM) auf einem Wert unterhalb eines vorbestimmten Schwellwerts ist.
